## Europäisches Patentamt
## European Patent Office
## Office européen des brevets

(19)

(11) Publication number: **0 063 857**
**B1**

(12)

# EUROPEAN PATENT SPECIFICATION

(45) Date of publication of patent specification: **14.05.86**

(51) Int. Cl.⁴: **F 16 K 27/06**

(21) Application number: **82300994.9**

(22) Date of filing: **25.02.82**

(54) **Multi-component valve which can be assembled in a straight line or in an elbow configuration.**

(30) Priority: **20.03.81 IT 1247581**

(43) Date of publication of application:
**03.11.82 Bulletin 82/44**

(45) Publication of the grant of the patent:
**14.05.86 Bulletin 86/20**

(84) Designated Contracting States:
**AT BE CH DE FR GB LI NL**

(56) References cited:
**DE-A-2 249 056**
**FR-A-2 120 658**
**GB-A-1 419 747**

(73) Proprietor: **F.I.P. FORMATURA INIEZIONE POLIMERI S.p.A**
**Pian di Parata**
**Casella Genoa (IT)**

(72) Inventor: **Mulas, Piero**
**Via Dodecaneso 50/6**
**Genoa (IT)**
Inventor: **Bonissone, Giancarlo**
**Piazza Paolo Da Novi 7/7**
**Genoa (IT)**

(74) Representative: **Lyndon-Stanford, Edward Willoughby Brooke et al**
**Marks & Clerk 57/60 Lincoln's Inn Fields**
**London WC2A 3LS (GB)**

Courier Press, Leamington Spa, England.

## Description

### Background of the Invention

The valve is designed so that it can be configured for insertion in a straight pipe, i.e. between two aligned conduits, or can be configured for insertion in an elbow pipe, i.e. between conduits forming a 90° elbow. A valve of this type allows one to halve the number of pieces to be stored, with clear economic advantages.

GB—A—1 419 747 discloses a valve of this type. However, the actuating member is a ring which slides between the two parts of the valve body, so that its positioning is unusual and inconvenient and would not lead to the commercial acceptability of the valve. Furthermore, the flow duct through the valve is partially formed by the inner walls of the valve body and partially by a duct in the obturator, and is significantly less direct in the elbow configuration than in the straight line configuration, the elbow configuration causing an excessive pressure drop which can detract from the operation of the whole piping system; in addition, the longer and more contorted path in an elbow configuration gives a greater tendency to turbulence and flow separation, and the valve is more inclined to cause vibration and noise, leading in turn to greater wear and shorter life of the valve itself.

In general terms, it is desirable to provide a valve in which the operating member can be of the standard type and in a standard position. In addition, it is desirable to provide a valve in which the internal flow duct is as direct as the configuration of the valve permits.

### The Invention

The invention provides a multi-component valve as set forth in Claim 1. The remaining Claims set forth preferred features of the invention.

The arrangement of the valve of the invention enables the operating member to be coaxial with the obturator and in a conventional position for a straight-line or elbow-type cock — the axis of rotation of the obturator is perpendicualr to the axis of the two valve ducts when they are in their aligned configuration. In addition, the flow path through the valve has a straight axis in the straight-line configuration and has a simple right-angle bend in the elbow configuration; in the straight-line configuration, the flow path is along the horizontal bar of the T-shaped duct, and in the elbow configuration, the flow path is along half of the horizontal bar and along the vertical bar.

### Embodiment of the Invention

An embodiment of the invention is now described, by way of example, with reference to the accompanying drawings, in which:

Figure 1 is an exploded section through a valve of the invention, in the configuration used when the two conduits meeting at the valve have aligned axes;

Figure 2 is a view along the plane II—II of Figure 1;

Figure 3 is a view along the plane III—III of Figure 1;

Figure 4 is a normal section, corresponding to that of Figure 1; and

Figure 5 is a section analogous to that of Figure 4, in which however the two main components of the valve body are assembled in the configuration used when the conduits meeting at the valve have their axes at 90°C.

The valve illustrated is a two position, two-connection cock or tap with a spherical obturator, by which is meant an obturator 10 with part-spherical obturating surfaces. The obturator 10 has a spindle 11 which passes through the upper part (as shown in the Figures) of the valve body 20.

A handle 12 can be mounted on the end of the spindle 11 in a way known per se.

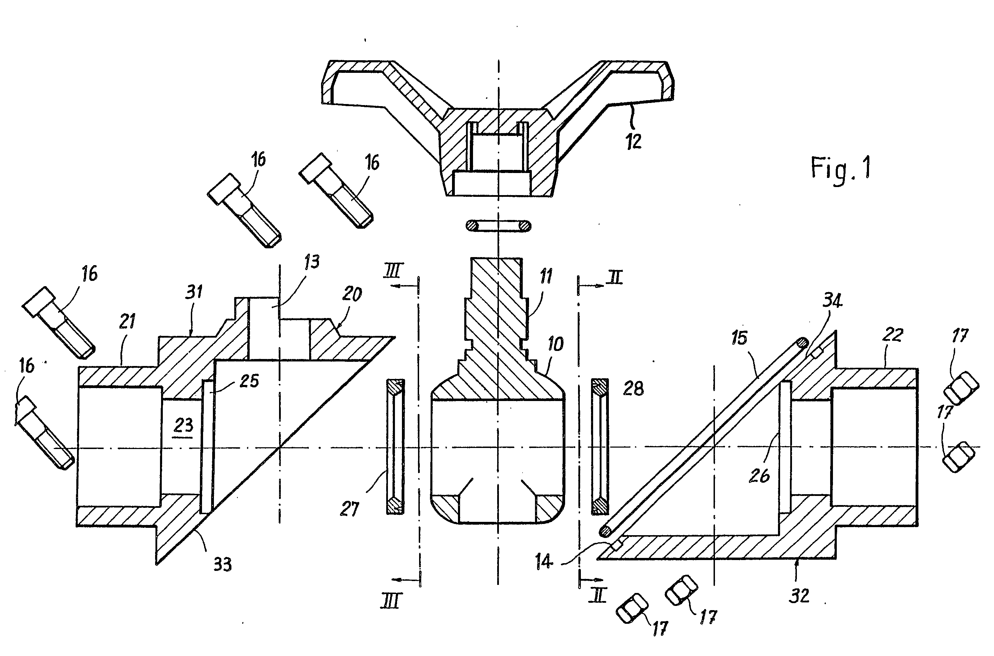

The valve body 20, in the configuration shown in Figures 1 to 4, is substantially cylindrical; two sleeves 21 and 22 project from its ends, for connection in any suitable manner to the ends of two conduits (not shown). At their inner ends, the two sleeves 21, 22 have narrower bore parts 23, 24; annular grooves or seats 25, 26 are formed on the internal faces of the narrower bore parts 23, 24 for seals 27, 28 (see Figure 1).

The valve body 20 has an internal, substantially cylindrical cavity or chamber 29 between the narrower bore parts 23, 24.

If the valve body 20 described up to this point were made in a single piece (apart from constructional arrangements permitting the insertion or the substitution of the obturator and the respective seals), the valve would not differ from a spherical obturator valve of the traditional type.

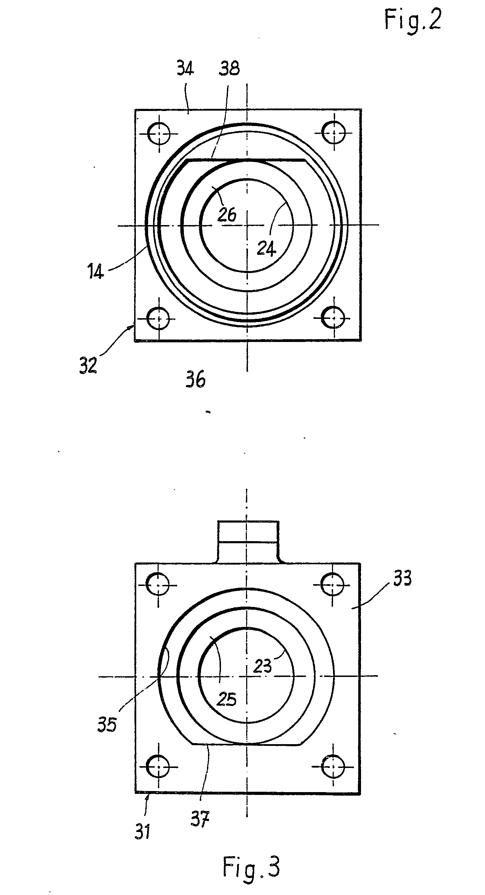

However, according to the invention, the valve body 20 is split into two main components 31 and 32 along a plane which makes an angle of 45° with the axis of rotation the obturator 10 and with the axis of the sleeves 21 and 22. The contact surfaces 33 and 34 are of rectangular shape, and the substantially cylindrical chamber cuts into the contact surfaces 33, 34 elliptical apertures 35, 36 which, in the views of Figures 2 and 3 (each of which forms an angle of 45° with the plane just described) appear in the shape of circles an arc of which has been replaced by a chord 37, 38.

The main component 31 differs from the main component 32 by the presence of the opening for the obturator spindle 11.

In addition, the element 32 has on its contact surface 34 an elliptical groove 14 for a seal 15; in Figure 2, the elliptical groove 14 has the appearance of a circular groove because of the effect of the Figure 2 view.

The component elements 31 and 32 are fixed together by four small bolts 16 associated with corresponding nuts 17.

As can be seen from Figures 1 and 5, if the component 32 is rotated through 180° about the axis of the sleeve 22 and then clockwise through 90° about the axis perpendicular both to the axis of the obturator 10 and to the axis of the sleeve 21, the second component 32 assumes the position illustrated in Figure 5 in which the axes of the sleeves 21 and 22 are at 90°.

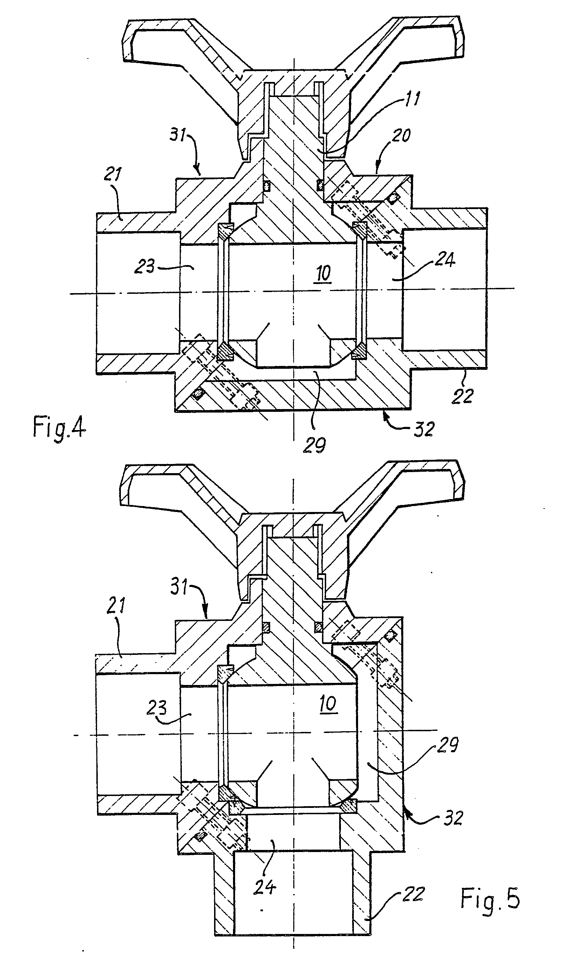

As can be seen in Figure 5, it is still possible to use the same components as for the configuration illustrated in Figure 4, which causes a notable saving in the expense of producing and storing the components of valves suitable for two different purposes and which, when assembled have the configurations of two different valves.

Many modifications and variants can be made to the embodiment described above.

## Claims

1. A multi-component valve having a valve body (20) with an internal chamber containing a rotary obturator (10) having a part-spherical external obturating surface, seat means (25, 27 and 26, 28) for sealing against the obturating surface of the obturator, two ducts (21, 23 and 22, 24) at least one of which is controlled by rotary movement of the obturator, leading from the chamber, the valve body being split diagonally along a plane (33, 34) which is inclined at 45° with respect to the axis of each of said ducts, and the valve being capable of being assembled in two different configurations in the first of which the axes of the two ducts are aligned (Figure 4) and in the second of which the said axes are in directions at right angles to each other (Figure 5), characterised in that the axis of rotation of the obturator (10) is perpendicular to the axis of the two ducts (21, 23 and 22, 24) when they are in their aligned configuration, the obturator has a generally T-shaped duct, two limbs of which are aligned and normal to the axis of rotation of the obturator (10) whilst the third limb is aligned with the axis of rotation of the obturator, and the seat means (25, 27 and 26, 28) are annular and coaxial with the respective duct.

2. The valve of Claim 1, wherein planar and opposed faces (33, 34) of two main valve body components (31, 32) meeting along said plane are held against one another by screw means (16, 17) with the interposition of a seal (15) which is housed in at least one annular groove formed on said face of one of the two main valve body components.

3. The valve of Claim 1 or 2, wherein the valve chamber is cylindrical in the valve configuration in which the ducts (23, 21) and (24, 22) are aligned.

4. The valve of any one of the preceding Claims, wherein the valve body (20) comprises two main components (31, 32) one of which provides an opening for a control spindle (11) of the obturator (10).

5. The valve of any one of the preceding Claims, wherein each duct (23, 21) and (24, 22) is associated with a respective seat means, the seat means comprising an annular seat (25, 26) and a sealing ring (27, 28) in the respective seat.

## Revendications

1. Vanne en plusieurs pièces comportant un corps de vanne (20) à chambre interne contenant un obturateur tournant (10) présentant une surface d'obturation externe en forme de partie de sphère, des moyens formant siège (25, 27 et 26, 28) devant s'appliquer hermétiquement contre la surface d'obturation de l'obturateur, deux conduits (21, 23 et 22, 24) dont l'un au moins est commandé par mouvement de rotation de l'obturateur, partant de la chambre, le corps de vanne étant divisé diagonalement suivant un plan (33, 34) incliné à 45° sur l'axe de chacun desdits conduits, et la vanne étant susceptible d'être assemblée en deux configurations différentes dans la première desquelles les axes des deux conduits sont alignés (figure 4) et dans la seconde desquelles lesdits axes sont orientés perpendiculairement l'un à l'autre (figure 5), caractérisée en ce que l'axe de rotation de l'obturateur (10) est perpendiculaire à l'axe des deux conduits (21, 23 et 22, 24) en configuration d'alignement, l'obturateur présente un conduit en forme générale de T, dont deux branches sont alignées et normales à l'axe de rotation de l'obturateur (10) tandis que la troisième branche est alignée avec l'axe de rotation de l'obturateur, et les moyens formant siège (25, 27 et 26, 28) sont annulaires et coaxiaux au conduit respectif.

2. Vanne selon la revendication 1, dans laquelle des faces planes et opposées (33, 34) de deux éléments de corps de vanne principaux (31, 32) se rencontrant dans ledit plan sont maintenues l'une contre l'autre par des moyens à pas de vis (16, 17) avec interposition d'un joint (15) logé dans au moins une rainure annulaire façonnée sur ladite face de l'un des deux éléments de corps de vanne principaux.

3. Vanne selon la revendication 1 ou 2, dans laquelle la chambre de vanne est cylindrique dans la configuration de vanne dans laquelle les conduits (23, 21) et (24, 22) sont alignés.

4. Vanne selon l'une quelconque des revendications précédentes, dans laquelle le corps de vanne (20) comprend deux éléments principaux (31, 32) dont l'un présente un trou de réception d'une tige (11) de commande de l'obturateur (10).

5. Vanne selon l'une quelconque des revendications précédentes, caractérisée en ce que chaque conduit (23, 21) et (24, 22) est associé avec un moyen formant siège respectif, le moyen formant siège comprenant un siège annulaire (25, 26) et un anneau d'étanchéité (27, 28) dans le siège respectif.

## Patentansprüche

1. Mehrteiliges Ventil mit einem Ventilgehäuse (20) mit einer inneren Ventilkammer (29) zur Aufnahme eines drehbar gelagerten Verschlußgliedes (10) mit äußeren, sphärischen Dichtflächen und mit Venilsitzflächen (25, 27; 26, 28) zur Abdichtung gegen die Dichtflächen des Verschlußgliedes (10) und mit zwei, mit der Ventilkammer verbundenen Anschlußkanälen (21, 23; 22, 24), von welchen mindestens einer durch Verdrehung des Verschlußgliedes in seinem Durchlaßquerschnitt regelbar ist und wobei das Ventilgehäuse (20) diagonal entlang einer Ebene (33, 34) geteilt ist, welche unter einem Winkel von 45° gegenüber den Achsen der Anschlußkanäle geneigt ist und das Ventil so in zwei unterschiedlichen Ausgestaltungen zusammenbaubar ist, wobei in der ersten Ausgestaltung die Achsen der beiden Anschlußkanäle miteinander fluchten (Fig. 4) und in der zweiten Ausgestaltung die erwähnten Achsen rechtwinkelig zueinander stehen (Fig. 5), dadurch gekennzeichnet, daß die Drehachse des Verschlußgliedes (10) rechtwinkelig zu den Achsen der beiden Anschlußkanäle bzw. Bohrungen (21, 23) bzw. (22, 24) steht, wenn diese fluchtend angeordnet sind und daß das Verschlußglied einen, im wesentlichen T-förmigen Durchlaßkanal aufweist, wobei zwei Abschnitte desselben miteinander fluchten und rechtwinkelig zur Drehachse des Verschlußgliedes (10) liegen, wogegen der dritte Abschnitt mit der Drehachse des Verschlußgliedes fluchtet und die Ventilsitzmittel (25, 27; 26, 28) ringförmig sind und koaxial mit den entsprechenden Anschlußkanälen bzw. Bohrungen liegen.

2. Mehrteiliges Ventil nach Anspruch 1, dadurch gekennzeichnet, daß die ebenen und einander gegenüberliegenden Flächen (33, 34) der zwei Bestandteile (31, 32) des Ventilgehäuses (20), mit welchen diese aneinander liegen, mittels Schrauben (16, 17) unter Zwischenschaltung einer Dichtung (15) zusammengehalten sind und die Dichtung (15) in mindestens einer Ringnut (14) liegt, welche in einer der Flächen (33, 34) einer der zwei Bestandteile des Ventilgehäuses (20) vorgesehen ist.

3. Mehrteiliges Ventil nach Anspruch 1 oder 2, dadurch gekennzeichnet, daß die Ventilkammer (29) zylinderisch ist, wenn die Anschlußkanäle (21, 22) bzw. die Bohrungen (23, 24) in einer Flucht liegen.

4. Mehrteiliges Ventil nach einem der vorstehenden Ansprüche, dadurch gekennzeichnet, daß das Ventilgehäuse (20) aus zwei Bestandteilen (31, 32) gebildet ist, von welchen eine eine Öffnung für die Aufnahme der Betätigungsspindel (11) für das Verschlußglied (10) aufweist.

5. Mehrteiliges Ventil nach einem der vorstehenden Ansprüche, dadurch gekennzeichnet, daß jeder Anschlußkanal (21, 22) bzw. jede Bohrung (23, 24) mit Ventilsitzmitteln verbunden ist, welcher einen ringförmigen Sitz (25, 26) beinhalten mit je einem Dichtring (27, 28).

Fig.1

0 063 857

Fig.2

34  38

26

24

14

32

36

33

23

25

35

37

31

Fig.3

Fig.4

Fig.5